Europäisches Patentamt

European Patent Office

Office européen des brevets

(11) Veröffentlichungsnummer: **0 284 995 B1**

(12) **EUROPÄISCHE PATENTSCHRIFT**

(45) Veröffentlichungstag der Patentschrift:
03.04.91 Patentblatt 91/14

(51) Int. Cl.⁵: **B65G 69/00**

(21) Anmeldenummer: **88104693.2**

(22) Anmeldetag: **24.03.88**

(54) **Dichtungsvorrichtung des Spaltes zwischen einer Gebäudeöffnung und einem an diese herangefahrenen Fahrzeug.**

(30) Priorität: 31.03.87 DE 3710598

(43) Veröffentlichungstag der Anmeldung:
05.10.88 Patentblatt 88/40

(45) Bekanntmachung des Hinweises auf die
Patenterteilung:
03.04.91 Patentblatt 91/14

(84) Benannte Vertragsstaaten:
AT BE CH DE ES FR GB GR IT LI LU NL SE

(56) Entgegenhaltungen:
CH-A- 555 969
DE-A- 3 020 065
NL-A- 7 009 696
US-A- 3 665 997

(73) Patentinhaber: VAN WIJK NEDERLAND B.V.
Bouwweg 14
NL-8243 PJ Lelystad (NL)

(72) Erfinder: Pereira das Dores, Antonio
Archipel 36-09
NL-8224 HL Lelystad (NL)

(74) Vertreter: Beil, Hans Chr., Dr. et al
Beil, Wolff und Beil, Rechtsanwälte
Adelonstrasse 58 Postfach 80 01 40
W-6230 Frankfurt am Main 80 (DE)

## Beschreibung

Die Erfindung betrifft eine Dichtungsvorrichtung gemäß den Ansprüchen 1 bis 7.

Wenn ein Lastkraftwagen zur Beladung mit dem Heck an eine dafür vorgesehene Gebäudeöffnung heranfährt, bleibt zwischen dem Heck des LKW und dem Gebäude ein Spalt offen, über den Witterungseinflüsse während des Beladevorgangs in dem Gebäude und dem LKW wirksam werden können. Es sind bereits Vorrichtungen bekannt, mit denen der Spalt zwischen dem Gebäude und dem Kraftfahrzeug abgedichtet werden kann. Man ordnet dabei in entsprechendem Abstand vor der Gebäudeöffnung Bahnen, Streifen oder Lamellen aus elastischem Material an, die eine lichte innere Öffnung ergeben, die kleiner als die Heckfläche des Lastkraftwagens ist. Beim Zurückfahren des Lastkraftwagens an die Verladerampe legen sich diese Dichtmittel dann an das Heckteil des Lastkraftwagens an. Diese Art von Dichtung ist einem erheblichen Verschleiss·ausgesetzt, weil der Lastkraftwagen mit seinem Heck in diese Abdichtung hineinstossen muss und die Abdichtung dabei an dem Heckaufbau des Lastkraftwagens so wohl dann schleift, wenn der Lastkraftwagen rückwärts an die Gebäudeöffnung heranfährt, als erneut dann bei seinem Wegfahren. Die Abdichtung kann auch durch aufblasbare Schläuche erfolgen, die im unaufgeblasenen Zustand das Heranfahren des LKW mit seinem Heck an die Ladeöffnung erlauben und die dann in aufgeblasenem Zustand sich an den Heckaufbau des Lastkraftwagens anlegen. Auch diese Lösung ist nicht optimal und darüberhinaus wegen des erforderlichen Materials, das luftdicht sein muss, relativ teuer. Ein wichtiges Element für gattungsgemässe Dichtungen ist darüberhinaus, dass diese Dichtungen auch dann wirksam sein müssen, wenn der Lastkraftwagen nicht genau mittig an die Gebäudeöffnung heranfährt oder aufgrund der Änderung der Belastung beim Be- oder Entladen sich die Höhe ändert bzw. er auch hin- und herschwankt. Diese Forderungen werden von den aus DE-GM 83 33 949 und CH-PS 576 580 bekannten Abdichtungen nicht erfüllt.

Die DE-A 3 020 065, die denn ersten Teil der Anspruchs 1 entspricht. offenbart eine Dichtungsvorrichtung, bestehend aus einem oberen und zwei seitlichen Gummitüchern, die jeweils an einer drehbaren Hohlwelle befestigt sind und über elektrische Mittel aufgewickelt bzw. abgerollt werden. Dabei können die Teile beim Aufrollen entgegen der Wirkung einer Feder gedreht werden. Beim Abrollen entspannt sich diese Feder und legt das Tuch mit dieser bestimmten Kraft an den Fahrzeugaufbau an, so daß eine optimale Anpassung an die sich beim Ladevorgang verändernde Höhe oder Neigung nicht erreicht werden kann.

Die CH-PS 555 969 beschreibt eine Torabdichtung für Verladerampen, welche aus zwei seitlichen Vorhängen besteht, die über Rollen und ein Zugseil miteinander so verbunden sind, daß sie gleichzeitig entweder gegen den zu bedienenden LKW hin- oder von demselben wegbewegt werden können. Als obere Abdichtung dienen fest verankerte Lamellen, so daß eine optimale Torabdichtung nach oben hin nicht gewährleistet ist.

Die der vorliegenden Erfindung zugrundeliegende Aufgabe liegt darin, eine Dichtungsvorrichtung bereitzustellen, bei der eine optimale Torabdichtung nach allen Seiten möglich ist und Bewegungen des an diese heranfahrenden Fahrzeugs automatisch ausgeglichen werden.

Diese Aufgabe wird erfindungsgemäß durch die kennzeichwende Merkmale der Anspruch 1 gelöst.

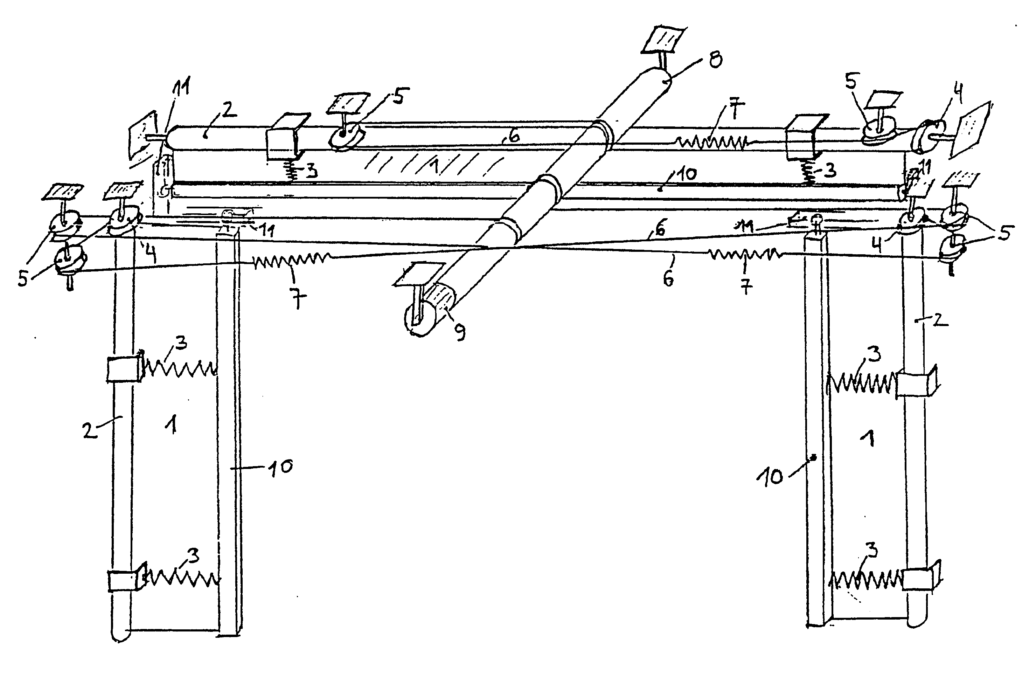

Anhand der Zeichnung wird die Erfindung im folgenden näher erörtert.

Die Vorrichtung besteht aus zwei Seitenteilen und einem Oberteil. Jedes dieser Teile seinerseits besteht aus einem Profil (10), das vorzugsweise mit Schaumstoff verkleidet ist und in einer Führungsschiene (11) läuft. An diesem Profil ist das Abdichttuch (1), bestehend aus einem wetterfesten, elastischen Material, befestigt. Parallel zu diesem Profil (10) ist eine Aufwickelrolle (2) angeordnet, die an beiden Enden drehbar gelagert ist und an der das Tuch (1) ebenfalls befestigt ist. Mit der Aufwickelrolle (2) ist eine Seilrolle (4) fest verbunden.

Das Profil (10) wird durch Federelemente (3), die vorzugsweise aus Knickfederarmen bestehen, von der Aufwickelrolle (2) wegbewegt, An der Seilrolle (4) ist ein Zugseil (6) befestigt, das über Umlenkrollen (5) zu einer Seilwickelrolle (8) führt, die über eine Antriebsvorrichtung (9), vorzugsweise einen Elektromotor, betätigt wird. Die Seilwickelrollen (8) können entweder gemeinsam durch eine Antriebsvorrichtung angetrieben oder es kann jeder Seilwickelrolle (8) eine eigene Antriebsvorrichtung (9) zugeordnet sein. Das Zugseil (6) enthält elastische Zugelemente (7), die aus einem entsprechend dimensionierten Gummiseil oder Zug federn bestehen können.

Im Ruhezustand ist das Abdichttuch (1) auf der Aufwickelrolle (2) aufgerollt, und demgemäss liegt das Abdichtprofil (10) an dieser Aufwickelrolle (2) mit dem Tuch (1) an. Das Zugseil (6) ist auf der Seilwickelrolle (8) aufwickelt. Wenn jetzt ein Lastkraftwagen an die innerhalb der aus diesen Seitenteilen und dem Oberteil gebildeten Abdichtungsvorrichtung angeordneten Gebäudeöffnung herangefahren ist, wird die Antriebsvorrichtung (9) betätigt und die Zugseile (6) rollen von der Seilwickelrolle (8) ab. über die Umlenkrollen (5) läuft das Zugseil auf die Seilrolle (4), auf der sich das Zugseil (6) aufwickelt, während gleichzeitig wegen der Federkraft der Federelemente (3) das Abdichttuch (1) von der Aufwickelrolle (2) abrollt und das Profil (10) damit an den Lastkraftwagen heranbewegt. Über einen Endschalter kann dieser Abwickelvorgang in Abhängigkeit von den Massen des LKW angehalten werden. Da die Federkraft der Federelemente (3) grösser als diejenige der elastischen Zugelemente (7) ist, steht der gesamte Antriebsmechanismus immer unter Spannung und die Abdichtprofile (10) liegen immer am LKW an. Wird das Profil (10) während des Verladevorgangs in Richtung auf die Aufwickelrolle (2) zubewegt, so bewirkt das elastische Zugelement (7) ohne weitere Betätigung der Antriebsvorrichtung (9), dass das Abdichttuch (1) so weit auf die Aufwickelrolle (2) aufgewickelt wird, dass das Tuch wieder gespannt ist. Wird der LKW durch einseitiges Belasten während des Beladens um seine Längsachse bewegt, so folgen die Abdichtprofile (10) diesen Bewegungen. Schließlich ist auch dann ein dichter Abschluss gewährleistet, wenn der LKW nicht genau mittig an die Öffnung herangefahren ist; auch in diesem Fall reicht ein Antriebsmechanismus für alle drei Abdichttücher aus und ein Nachverstellen einzelner Abdichttücher ist nicht erforderlich. Auf diese Weise wird immer eine optimale Dichtung des Spaltes zwischen Gebäudeöffnung und an diese herangefahrenem Fahrzeug gewährleistet.

Vor dem Wegfahren des LKW werden die Zugseile (6) wieder auf die Seilwickelrolle (8) aufgewickelt und dadurch werden die Profile (10) von dem Kraftfahrzeug wegbewegt, das von der Ladeöffnung wegfahren kann, ohne dass die Abdichtung an dem Fahrzeug schleift.

Vorzugsweise wird die erfindungsgemässe Dichtung in der Weise vor der Gebäudeöffnung angebracht, dass die gesamte Vorrichtung im Ruhezustand hinter einer Verkleidung liegt, die die Dichtung schützt und zugleich die erfindungsgemässe Vorrichtung mit der Gebäudewand dicht verbindet.

## Ansprüche

1. Dichtungsvorrichtung zur Abdichtung des Spaltes zwischen einer Gebäudeöffnung und einem an diese herangefahrenen Fahrzeug, bestehend aus zwei Seitenteilen und einem Oberteil, wobei jedes dieser Teile die folgenden Elemente aufweist
– ein mit Schaumstoff verkleidetes Profil (10), das in einer Führungsschiene (11) läuft,
– ein an dem Profil (10) befestigtes Abdichttuch (1)
– eine parallel zu dem Profil (10) angeordnete, an ihren Enden gelagerte Aufwickelrolle (2), an der das Tuch (1) ebenfalls befeatigt ist,
– eine mit der Aufwickelrolle (2) fest verbundene Seilrolle (4), dadurch gekennzeichnet, daß jedes dieser Teile ein oder mehrere das Profil (10) von der Aufwickelrolle (2) fort- auf das Fahrzeug zubewegende Federelemente (3) aufweist, und daß die Dichtungsvorrichtung aus einem Bewegungsmechanismus für die Seitenteile und das Oberteil besteht, wobei der Bewegungsmechanismus aus einer Seilwickelrolle (8) mit Antriebsvorrichtung (9) und einem über Umlenkrollen (5) laufenden Zugseil (6) besteht, das an der Seilwickelrolle (8) und der Seilrolle (4) befestigt ist und elastische Zugelemente (7) enthält, deren Federkraft geringer als diejenige der Federelemente (3) ist.

2. Dichtungsvorrichtung nach Anspruch 1, dadurch gekennzeichnet, dass die Seilwickelrollen (8) gemeinsam von einer Antriebsvorrichtung (9) bewegt werden.

3. Dichtungsvorrichtung nach einem der Ansprüche 1 und 2, dadurch gekennzeichnet, dass die Antriebsvorrichtung (9) ein Elektromotor ist.

4. Dichtungsvorrichtung nach einem der Ansprüche 1 bis 3, dadurch gekennzeichnet, dass die Federelemente (3) aus Federknickarmen bestehen.

5. Dichtungsvorrichtung nach einem der Ansprüche 1 bis 4, dadurch gekennzeichnet, dass die elastischen Zugelemente (7) Zugfedern sind.

6. Dichtungsvorrichtung nach einem der Ansprüche 1 bis 5, dadurch gekennzeichnet, dass die elastischen Zugelemente (7) Gummiseile sind.

7. Dichtungsvorrichtung nach einem der Ansprüche 1 bis 6, dadurch gekennzeichnet, dass die Abdichtungsvorrichtung im eingefahrenen Zustand hinter einer Verkleidung liegt.

## Claims

1. A sealing device for sealing the gap between an opening in a building and a vehicle driven up to said opening, comprising two lateral elements and an upper element, each of said elements comprising the following components
– a profile (10) covered with foam, which profile runs in a guide rail (11),
– a sealing sheet (1) secured to the profile (10),
– a winding-on roller (2), which is arranged parallel to the profile (10), is mounted at its ends and to which the sheet (1) is also secured,
– a cable roller (4) securely connected with the winding-on roller (2), characterised in that each of said elements comprises one or more spring elements (3) moving the profile (10) away from the winding-on roller (2) towards the vehicle, and the sealing device comprises a displacement mechanism for the lateral elements and the upper element, the displacement mechanism comprising a cable winding roller (8) with a drive device (9) and a traction cable (6), which runs over reversing rollers (5), is secured to the cable winding roller (8) and the cable roller (4) and comprises elastic tensioning elements (7), whose spring force is smaller than that of the spring elements (3).

2. A sealing device according to claim 1, characterised in that the cable winding rollers (8) are moved together by means of a drive device (9).

3. A sealing device according to one of claims 1 and 2, characterised in that the drive device (9) is an electromotor.

4. A sealing device according to one of claims 1 to 3, characterised in that the spring elements (3) are formed by bent spring arms.

5. A sealing device according to one of claims 1 to 4, characterised in that the elastic tensioning elements (7) are tension springs.

6. A sealing device according to one of claims 1 to 5, characterised in that the elastic tensioning elements (7) are rubber cables.

7. A sealing device according to one of claims 1 to 6, characterised in that the sealing device lies behind a cover in its withdrawn state.

## Revendications

1. Dispositif d'étanchéité destiné à obturer l'intervalle entre une ouverture ménagée dans un bâtiment et un vehicule approché de celle-ci, composé de deux parties latérales et une partie supérieure, chacune constituée des éléments suivants :
   – un profilé d'étanchéité (10) habille de mousse, se déplaçant dans un rail de guidage (11),
   – une jupe d'étanchéité (1) fixée sur le profilé d'étanchéité (10),
   – un cylindre d'enroulement (2) monté parallèlement au profilé d'étanchéité (10) et pivotant par ses extrémités, sur lequel la jupe d'étanchéité (1) est également fixée,
   – une poulie à câble (4) solidaire du cylindre d'enroulement (2), caractérisé en ce que chacune de ces parties présente un ou plusieurs éléments élastiques (3) éloignant le profilé d'étanchéité (10) du cylindre d'enroulement (2) et le poussant vers le véhicule, et en ce que le dispositif d'étanchéité se compose d'un mécanisme de déplacement des parties latérales et de la partie supérieure où le mécanisme de déplacement se compose d'un tambour (8) avec mécanisme d'entraînement (9) et d'un câble de traction (6) passant sur des poulies de renvoi (5), qui est fixé sur le tambour (8) et la poulie à câble (4) et qui comprend des éléments élastiques de traction (7) dont la force est inférieure à celle des éléments élastiques (3).

2. Dispositif d'étanchéité selon la revendication 1, caractérisé en ce que les tambours (8) sont mus ensemble par un mécanisme d'entraînement (9).

3. Dispositif d'étanchéité selon l'une des revendications 1 et 2, caractérisé en ce que le mécanisme d'entraînement (9) est un moteur électrique.

4. Dispositif d'étanchéité selon l'une des revendications 1 à 3, caractérisé en ce que les éléments élastiques (3) sont des ressorts coudés.

5. Dispositif d'étanchéité selon l'une des revendications 1 à 4, caractérisé en ce que les éléments élastiques de traction (7) sont des ressorts de traction.

6. Dispositif d'étanchéité selon l'une des revendications 1 à 5, caractérisé en ce que les éléments élastiques de traction (7) sont des câbles en caoutchouc.

7. Dispositif d'étanchéité selon l'une des revendications 1 à 6, caractérisé en ce que le dispositif d'étanchéité, à l'état rétracté, se trouve derrière un habillage.

EP 0 284 995 B1